# EUROPEAN PATENT SPECIFICATION

(11) **EP 2 572 137 B1**
(45) Date of publication and mention of the grant of the patent: **12.08.2015**
(21) Application number: 11729691.3
(22) Date of filing: 23.05.2011
(51) Int. Cl.: F16P 3/14, A41D 19/015, B21D 55/00

(54) **PLANT FOR WORKING PRODUCTS**
ANLAGE ZUR BEARBEITUNG VON PRODUKTEN
INSTALLATION DESTINÉE À TRAVAILLER DES PRODUITS

(30) Priority: 21.05.2010 IT MO20100153
(43) Date of publication of application: 27.03.2013
(73) Proprietor: Steinex S.r.l., 38056 Levico Terme (TN) (IT)
(72) Inventor: BOZZOLI, Alessandro, I-38056 Levico Terme (TN) (IT); FRIZZI, Marco, I-38056 Levico Terme (TN) (IT); CRISTOFORETTI, Luca, I-38056 Levico Terme (TN) (IT); VACCARI, ALessandro, I-38056 Levico Terme (TN) (IT)
(74) Representative: Brunacci, Marco
(86) International application number: PCT/IB2011/001095
(87) International publication number: WO 2011/144997

(56) References cited:
- EP-A1- 0 600 841
- EP-A2- 0 533 329
- EP-A2- 1 353 111
- WO-A1-99/66253
- WO-A1-2007/060698
- FR-A1- 2 779 669
- US-A- 5 669 809
- US-B1- 6 856 852

## Description

### Technical Field

The present invention relates to a plant for working products.

### Background Art

It is known that numerous plants for working products such as presses, saws, lathes, milling machines or other equipment for cutting, bending, drilling or the like, consist of a machine having a work tool (a hammer, a blade, a saw, a cutter, etc.) which is sometimes operated at high speed.

The so-called "stone-breaking" machines, built to break natural or artificial stones, consist in a base frame supporting a horizontal work table, for resting blocks to be broken, and the work tool, which substantially consists of a breaking blade vertically moving above the work table.

The user, positioned in front of the machine, manually moves the blocks to be broken, placing them in the required position below the breaking blade, which is operated by means of a pedal or double-button control.

The broken blocks can be again positioned below the breaking blade until products of the required dimensions are obtained, e.g., of the type of flints, cubic road stones, wall stones and tiles of various shapes.

To ensure the safety of the user during normal plant operation, these machines normally have special safety systems which allow preventing the operation of the breaking blade in case the operator's hands are not in a safe position, e.g., too close to the tool.

A particular type of safety system consists of a pair of buttons in front of the user and far enough from the breaking blade, which have to be pressed at the same time to allow the tool to drop and break the blocks of stones. Alternatively, "stone-breaking" machines are known equipped with a safety system made up of photocells located opposite the user on either sides of the breaking blade.

The photocells, which point towards two safety areas for the user, separate and far enough from the breaking blade, are excited by means of a system of reflex reflectors fitted on the operator's gloves.

In point of fact, when the operator places both hands in the photocell reading field, the machine understands that the user is in safety condition and allows operating the pedal control to allow the breaking blade to drop.

If the operator with the reflex reflector gloves moves outside the photocell reading field, with the risk of placing a hand under the tool, the machine operation is stopped and the breaking blade stops, thereby avoiding any chance of the user being crushed.

The system of photocells can be replaced by equivalent optoelectronic systems of the type of lasers, cameras or other visual devices.

These plants of traditional type do however have a number of drawbacks.

The machines with safety buttons are not in fact very practical and easy to use inasmuch as such pushbutton panels, which have to be positioned far enough away from the tool to ensure the necessary safety conditions, but at the same time close enough to the work area to be handy for the operator, more often than not end up by hindering user movement during stone breaking operations.

The machines with photocell systems or similar optoelectronic devices, on the other hand, have the drawback of not being very reliable in detecting the user's hands, inasmuch as the work environment where the reading of the reflex reflectors takes place is rather complex due to interference factors such as dusts, dirt, rain, changes in light and temperature.

In particular, the functionality and efficiency of such machines is considerably reduced just as soon as dust or other impurities begin to accumulate in the environment surrounding the work area which can deposit on the reflex reflectors and prevent the photocells from seeing them correctly.

In such circumstances, the gloves are not recognised by the safety system not even when they are correctly placed in the safety positions, causing pointless machine stoppages and a reduction of operator productivity, with a consequent increase in production costs which, inevitably, affect the retail price, with the risk of making the manufactured products less competitive on the market. Other types of safety systems are illustrated in the patent documents EP 0 600 841, US 6,856,852 and US 5,669,809.

In particular, document EP 0 600 841 discloses an accident-preventing control device which comprises a sensing unit having an active portion disposed close to a lower end of the operating head of a stone-breaking machine.

In the presence of an obstacle interfering with the active portion during the work stroke of the operating head, the sensing unit sends a stop signal to the oil-operated cylinder which moves the operating head.

A pair of enabling members requiring the intervention of the operator's two hands start up the oil-operated cylinder again, for completing the work stroke of the operating head.

### Description of the Invention

The main aim of the present invention is to provide a plant for working products that is practical and easy to use and functional, has compact dimensions and such as not to hinder the operator during the carrying out of his/her duties, and which is able to operate in any condition of the surrounding environment, allowing an increase in productivity with respect to traditional machines. Another object of the present invention is to provide a plant for working products, that allows to overcome the mentioned drawbacks of the state of the art in the ambit of a simple, rational, easy and effective to use as well as low cost solution.

The above objects are achieved by the present plant for working products having the features cited in claim 1.

### Brief Description of the Drawings

Other characteristics and advantages of the present invention will become more evident from the description of some preferred, but not sole, embodiments of a plant for working products, illustrated purely as an example but not limited to the annexed drawings in which:

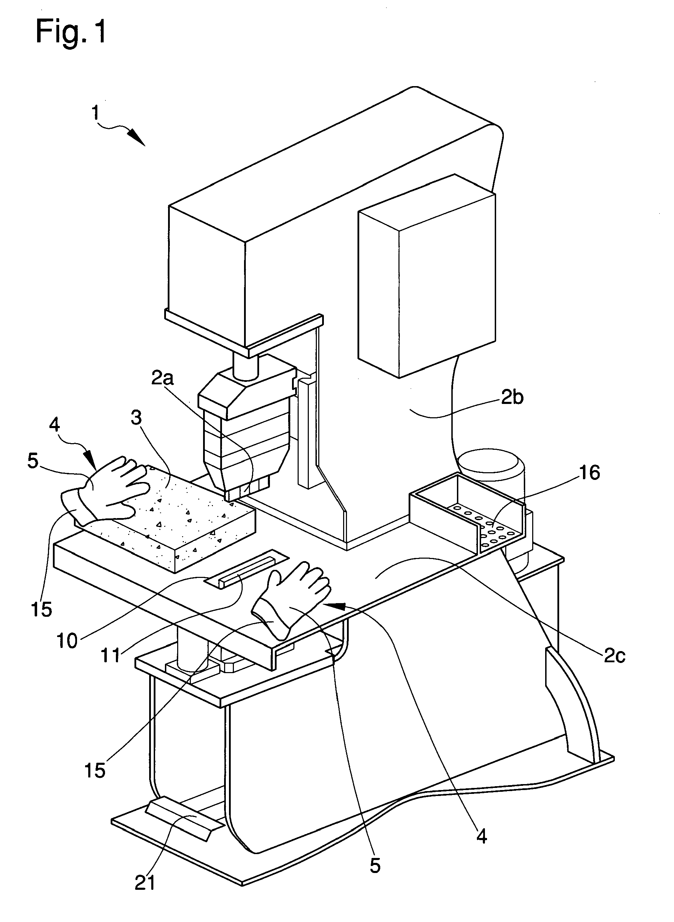

figure 1 is an axonometric view of a preferred embodiment of the plant according to the invention;
figure 2 is a schematic and partial axonometric view of the plant of figure 1; figure 3 is another schematic and partial axonometric view of the plant of figure 1;
figure 4 is a section view of a detail of the glove provided in the plant of figure 1;
figure 5 is an axonometric view of a further embodiment of the plant according to the invention;
figure 6 is a schematic and partial axonometric view of the plant of figure 5.

### Embodiments of the Invention

With particular reference to such figures, globally indicated by 1 is a plant for working products.

The plant 1 comprises a machine 2a, 2b, 2c, having a mobile tool 2a for working products 3, and a safety system 4 for operating the tool 2a in safety conditions for a user.

In particular, the safety system 4 comprises a piece of clothing 5 that can be worn by the user, an electromagnetic field generator 6, which is suitable for generating an electromagnetic field 7 and which is mounted on at least one between the piece of clothing 5 and the machine 2a, 2b, 2c, and an electromagnetic sensor element 8, which is suitable for cooperating with the electromagnetic field 7 to detect the position of the piece of clothing 5 with respect to the tool 2a and which is mounted on at least one between the piece of clothing 5 and the machine 2a, 2b, 2c.

The electromagnetic field generator 6 and the electromagnetic sensor element 8 are electronically associated with a processing and control unit 9 suitable for calculating the position of the piece of clothing 5 with respect to the tool 2a in accordance with the signal detected by the electromagnetic sensor element 8 and allowing the start/stop of the tool 2a depending on such position.

In this respect, it is specified that in the present treatise, the term "electromagnetic field" must be understood in the appropriate physical sense: i.e., not only as a radiofrequency field propagating into space, but also as the concomitant distribution of an electric field and of a magnetic field variable in time in a given region not having propagation or distribution characteristics of a static electric field and/or magnetic field.

With sources variable in time in fact both electric and magnetic effects are always present, and whether the one or the other clearly prevail will depend on the characteristics of the sources and on their distance, in which case we simply speak of electric field or magnetic field.

In the particular embodiments shown in the illustrations, the machine 2a, 2b, 2c is of the stone breaking type and has a base frame 2b and a work and support table 2c for resting the products 3, which consist of stones to be broken.

The stones 3 consist of blocks of all types of natural and artificial stone and are intended to be broken by means of the tool 2a.

The tool 2a consists of a breaking blade moving in a substantially vertical direction above the work and support table 2c.

More in detail, the breaking blade 2a is placed overhanging an opening 10 which is obtained passing through the work and support table 2c and is at least in part occupied by a fixed blade 11 opposite the breaking blade 2a.

In practice, the work and support table 2c is slightly swinging and the lowering of the breaking blade 2a determines the crushing of the stones 3 between the breaking blade itself and the fixed blade 11.

Alternative embodiments of the invention cannot however be ruled out wherein the machine 2a, 2b, 2c is of different type from the stone-breaking machines and is intended for carrying out machining operations different from that illustrated; it is possible, for example, that the machine 2a, 2b, 2c consist of a press, a saw, a bending machine, a cutting and/or drilling machine, a lathe or milling machine, in any case equipped with a tool 2a made to move, for example, at high speed and therefore in potential-hazard conditions.

With reference to the embodiment shown in the figures from 1 to 4, the electromagnetic field generator 6 is fitted on the piece of clothing 5 and the electromagnetic sensor element 8 is fitted on the machine 2a, 2b, 2c.

More in detail, the safety system 4 comprises two pieces of clothing 5, consisting of a pair of gloves for protecting both the user's hands; alternative embodiments cannot however be ruled out wherein the piece of clothing 5 consists of a wrist device, a band, a ring or a bracelet, or, in the case of machining operations different from stone 3 breaking, of a footwear, a helmet, a hat or anything else the user might wear.

On each glove 5 is fitted an electromagnetic field generator 6 comprising a first metal element 12 and a second metal element 13 between which is positioned an alternate-current generator 14.

In point of fact, the first metal element 12 and the second metal element 13 are shaped to form two layers, superimposed but not in direct contact with each other, of the gloves 5, so that the first metal element 12, arranged furthest on the outside, represents the emitter pole of the difference in potential generated by the alternate-current generator 14, while the second metal element 13, arranged furthest on the inside, represents the reference pole.

More in detail, each glove 5 comprises a multi-layer structure having:
- a first layer 26, for outer covering, which covers the entire totality of the user's hand. The first layer 26 is made of electrically insulating material (e.g., rough cloth typical of work gloves) and acts as a global wrapping and physical protection;
- a second layer 27, in electrically conductive material, arranged inside said first layer 26 and suitable for defining the first metal element 12. The second layer 27 is meant to be connected to the alternate-current generator 14 and can be either in the form of a mesh net or in the form of continuous fabric. Advantageously, the second layer 27 has a surface extension corresponding to the complete glove, so as to ensure that all the points of the hand act as an electromagnetic field source and are susceptible to detection;
- a third layer 28 arranged inside the second layer 27. The third layer 28 is made of electrically insulating and waterproof material (e.g., waterproof cotton or Goretex). The waterproofing is required to avoid an electrically conductive path being established between the second layer 27 and the user's hand by means of hand perspiration. Advantageously, the third layer 28 also has a surface extension corresponding to the complete glove, so as to ensure the total electric insulation of the second layer 27;
- a fourth layer 29, in electrically conductive material, arranged inside the third layer 28. The fourth layer 29 is intended to be connected to the alternate-current generator 14 and is suitable for defining the second metal element 13 placed directly in contact with the user's hand, which acts as an earth connection. Advantageously, the fourth layer 28 has a partial surface extension which does not correspond to the entire glove extension and is suitable for coming into contact with a part of the user's hand only (e.g., the back or the wrist).

Each glove 5, furthermore, comprises a cuff 15 wherein is housed the alternate-current generator 14 electrically connected to the second layer 27 and to the fourth layer 29.

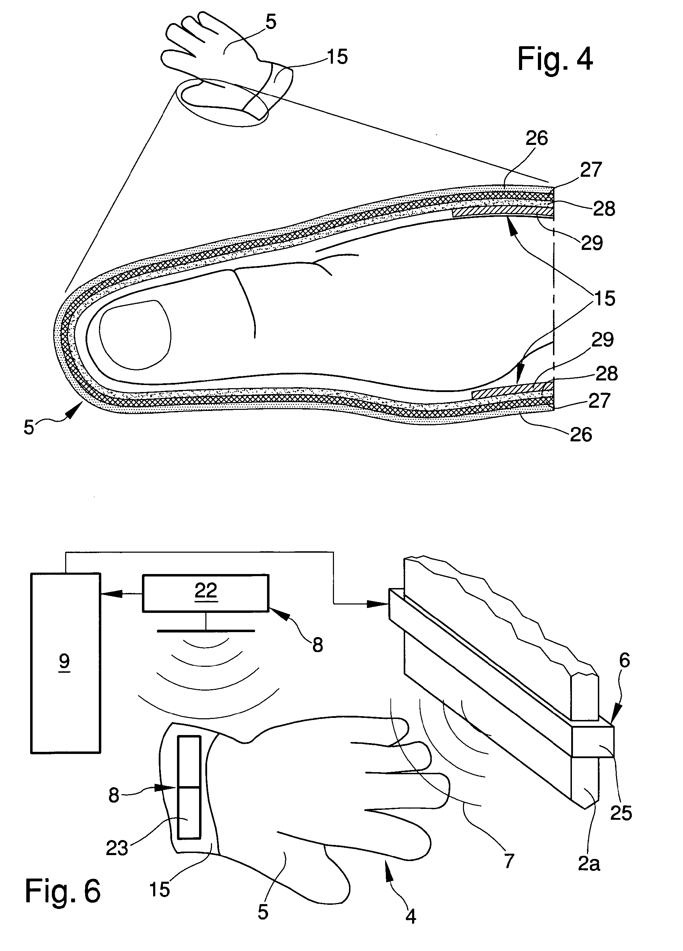

In the particular embodiment shown in the figure 4, the fourth layer 29 is only present in correspondence to the cuff 15, where the multi-layer structure of the glove 5 consists of all four layers 26, 27, 28, 29.

In the remaining part of the glove 5, on the other hand, the multi-layer structure only consists of the first three layers 26, 27, 28.

This allows equipping the cuff 15 with a fastening system (e.g., a Velcro fastening or the like) which allows tightening the cuff 15 on the user's wrist thereby ensuring the contact of the fourth layer 29 with the user's skin and, therefore, that it is earthed.

The alternate-current generator 14 is supplied by a supply battery integrated in the cuff 15 of each glove 5 and not shown in the illustrations.

Usefully, the supply battery is of the rechargeable type and the machine 2a, 2b, 2c comprises a recharging station 16 located in a detached position with respect to the tool 2a and which allows recharging the supply battery during the time the gloves 5 are not used.

Preferably, the recharging station 16 is of the "wireless" type, i.e., able to charge the supply batteries of the gloves 5 without requiring wires and connections by means of an electric wiring circuit.

Advantageously, the electromagnetic field 7 produced by the gloves 5 is an electric field of variable intensity in almost static condition, operating at a frequency below or equal to 1 MHz.

The electric signals produced and emitted by the metalized surface of the gloves 5 are detectable by the electromagnetic sensor element 8 which, for example, consists of a metal body that can be located substantially in the proximity of the tool 2a.

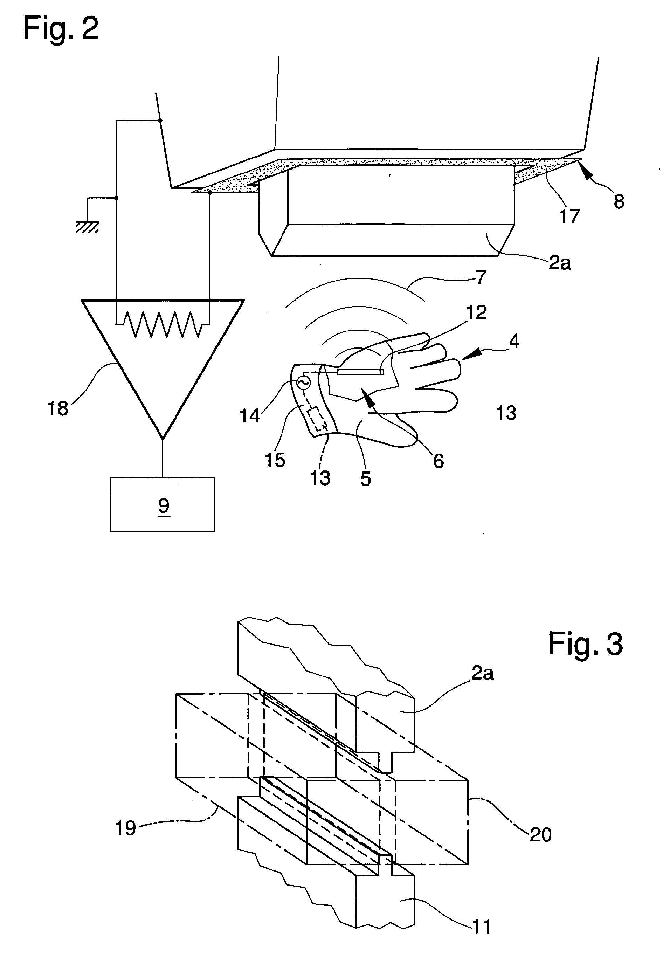

In this respect, it must be specified that, in this treatise, saying the metal body 17 is located in the proximity of the tool 2a means that such body can be fitted on the tool 2a, e.g., in the form of a lamina around the breaking blade 2a as shown in the figure 2 or in the form of two metal bars arranged longitudinally alongside the breaking blade 2a, or that the metal body 17 can be integrated and made in a single body with the tool 2a, e.g., by exploiting the metal surface of the breaking blade 2a.

The metal body 17 is electronically associated with a detection circuit of the signal 18 which allows obtaining the electric potential induced by the electromagnetic field 7 on the metal body 17 and transmitting such measurement to the processing and control unit 9.

The intensity of the electromagnetic field 7 detected by the metal body 17 is proportionate to the distance between the user's hands and the breaking blade 2a, thereby permitting, by device calibration, the control of the area in the proximity of the tool and the assessment of the possible hazard situations.

In this respect, it is underlined that the processing and control unit 9 is suitable for identifying two safety volumes 19, 20 substantially separate from the moving area of the tool 2a.

The safety volumes 19, 20, in particular, are arranged on the opposite sides of the vertical lying plane of the breaking blade 2a and of the fixed blade 11 (figure 3).

In point of fact, the positioning of the pieces of clothing 5 inside the safety volumes 19, 20 is suitable for allowing the operation of the tool 2a while the positioning of the pieces of clothing 5 outside the safety volumes 19, 20 is suitable for deactivating the tool 2a.

In other words, if both the user's hands, with the relative gloves 5, are arranged inside the safety volumes 19, 20, the processing and control unit 9 considers such configuration as a safety condition and it is programmed for the purpose of allowing the operation of the breaking blade 2a, e.g., by means of a traditional pedal control 21.

Diversely, if one or both the gloves 5 are placed by the user outside the safety volumes 19, 20, the processing and control unit 9 detects the situation of possible danger and prevents the intervention of the pedal control 21 if the breaking blade 2a has not been started yet, or commands the emergency stop of the breaking blade 2a if the hazard condition occurs after the tool 2a has been started.

The use of an electromagnetic field generator 6 fitted on the gloves 5 and of a metal body 17 fitted on the breaking blade 2a is an effective approach both in terms of the simplicity of the principle and in terms of the construction, as well as in terms of the relatively easy implementation of the system, including the electronic part.

The surveillance of the safety volumes 19, 20 is based on signals that can be well detected and processed, e.g., with an intensity above or equal to 5 mV, with consequent good operating reliability.

The plant 1 is furthermore also usefully equipped with a detection appliance for detecting any positioning of the user's hands underneath the block of stones 3. Such detection appliance, not shown in the illustrations, is connected to the processing and control unit 9 and is intended to provide a signal authorising the operation of the breaking blade 2a only in the case in which the user's hands, even if positioned inside the safety volumes 19, 20, are not positioned underneath the block of stones 3 to avoid, after the operation of the tool 2a, the user's hands being crushed between the block of stones 3 and the work and support table 2c.

This detection appliance, for example, consists of a device able to learn whether the back of the gloves 5, and therefore of the user's hands, is turned upwards or downwards.

In the event in fact of the user's hands, holding the block of stones 3, being correctly positioned above it, then the back of the gloves 5 is turned upwards. Conversely, in the event of the hands holding the block of stones 3 being positioned below it, then the back of the gloves 5 is clearly turned downwards. The operation of the plant 1 shown in the illustrations 1 to 4 is the following. The user wears the gloves 5 and positions the block of stones 3 below the breaking blade 2a.

During these operations, the electromagnetic field 7 produced by the gloves 5 interacts with the metal body 17 and allows the processing and control unit 9 to detect the position of the user's hands in the proximity of the breaking blade 2a. As long as the user's hands stay far enough away from the breaking blade 2a inside the safety volumes 19, 20 and are correctly positioned above the block of stones 3 and not below it, then the processing and control unit 9 authorises the operation of the breaking blade 2a by means of the pedal control 21.

On the other hand, if the user, during the start of the pedal control 21, still has his/her hands outside the safety volumes 19, 20, or below the block of stones 3, then the processing and control unit 9 intervenes on the machine 2a, 2b, 2c to prevent the lowering of the tool 2a even in the case of the pedal control 21 being operated.

Finally, in the event, after the start of the breaking blade 2a, of the user moving from a safety condition to a hazard condition, e.g., following the moving of his/her hands closer to the tool 2a, then the processing and control unit 9 intervenes to stop the downward stroke of the breaking blade 2a.

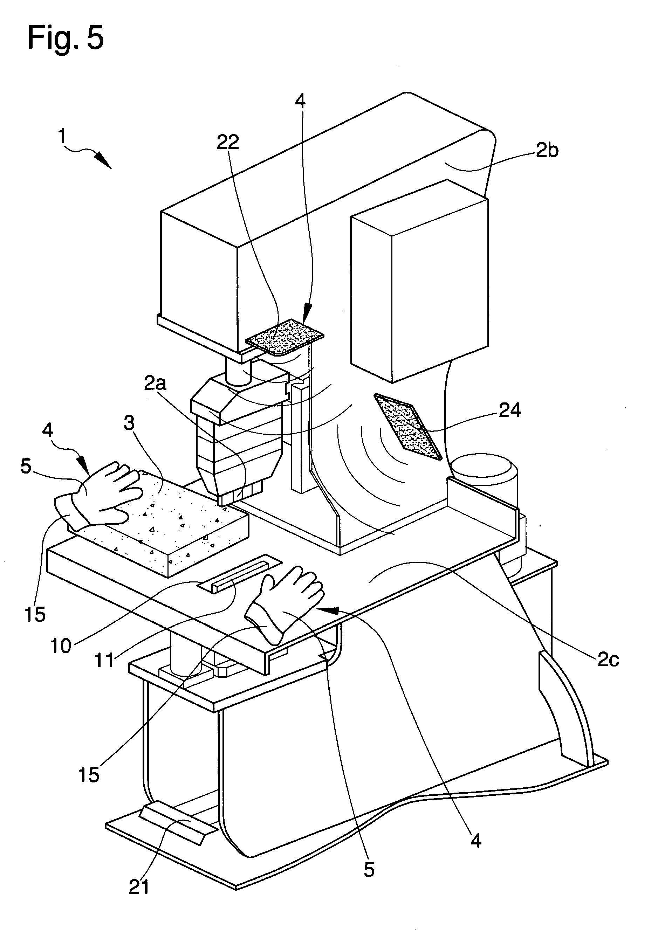

In the embodiment shown in the figures 5 and 6, the electromagnetic field generator 6 is fitted on the machine 2a, 2b, 2c and the electromagnetic sensor element 8 is fitted at least in part on the gloves 5.

More in detail, the electromagnetic sensor element 8 comprises a RFID reader 22 (Radio Frequency Identification) fitted on the machine 2a, 2b, 2c and a RFID tag 23 fitted in the cuff 15 of each glove 5.

The RFID reader 22 and the RFID tag 23 implement a communication protocol consisting in the sending of an electromagnetic signal by an antenna 24 or by the reader itself which is received by the RFID tag 23, which in turn transmits a reply signal received by the RFID reader 22.

The RFID tag 23 is a passive device which obtains energy from the interrogating signal emitted by the RFID reader 22 and at the same time, by means of "backscattering", is able to respond to the interrogations by emitting coded pulses which the RFID reader 22 can receive.

Usefully, the communication protocol between the RFID reader 22 and the RFID tag 23 is based on impulsive modulation (in amplitude) of a sinusoidal carrier at the frequency of 868 ÷ 869 MHz, with a well-defined modulation index.

The electromagnetic field generator 6 comprises a metal armature 25, which is electrically charged by means of an alternate-current generator, and is fitted on the machine in the proximity of the tool 2a, in the moving area of the breaking blade 2a, and is suitable for preventing communication between the RFID reader 22 and the RFID tag 23.

The operating frequency of the alternate-current generator which charges the metal armature 25 substantially coincides with the operating frequency of the RFID reader 22, the intensity of the electromagnetic field 7 generated by the metal armature 25 being substantially greater than the intensity of the signal of the RFID reader, e.g., 1.5 or twice as high.

The positioning and the dimensions of the metal armature 25, as well as the extension of the surrounding space of interest are such that, at the above-mentioned operating frequency, the electromagnetic field 7 can be considered quasistatic and therefore non-radiating.

The positioning of the metal armature 25 is further made so as not to hinder the work table of the machine 2a, 2b, 2c, e.g., behind the breaking blade 2a or, as schematically shown in figure 6, on the moving block carrying the breaking blade 2a.

By means of this technology, even in the embodiment of the figures 5 and 6, the processing and control unit 9 is able to identify two safety volumes substantially the same as the safety volumes 19, 20 shown in figure 3.

The recognising of the gloves 5, equivalent to the operator's hands, inside the safety volumes 19, 20 around the breaking blade 2a occurs by means of the electromagnetic field 7 which has such an intensity that the interrogation of the RFID tag 23 by the RFID reader 22 or the reply of the RFID tag 23 towards the RFID reader are inconsistent.

The electromagnetic field 7, in fact, located in the proximity of the breaking blade 2a, alters the communication between the RFID reader 22 and the RFID tag 23, preventing the RFID tag 23 from understanding the identification request code and in point of fact blocking the communication.

When the RFID tag 23 is unable to answer the periodical interrogations of the RFID reader 22 then it becomes to all effects invisible and the processing and control unit 9 is suitable for interpreting such circumstance as a hazard condition, wherein neither of the gloves 5 are arranged inside the safety volumes 19, 20, and operates to deactivate the breaking blade 2a.

Similarly to the embodiment of the figures from 1 to 4, the plant 1 also has a detection appliance for detecting any positioning of the user's hands underneath the block of stones 3.

The operation of the plant 1 shown in the figures 5 and 6 is substantially the same as that described for the embodiment of the figures from 1 to 4, with the difference that the presence of the user's hands in the safety volumes 19, 20 is obtained according to the signal detected by the RFID reader 22 and not by that detected by the metal body 17.

It has in point of fact been ascertained how the described invention achieves the proposed objects.

In this respect, it must be underlined that the particular solution of providing an electromagnetic field to recognise the position of the machine user allows obtaining a plant that is practical and easy to use and functional, with compact dimensions and, above all, also able to operate in the presence of dust and dirt, which do not affect the electromagnetic field and the measurement taken by the safety system.

## Claims

1. Plant (1) for working products comprising at least a machine (2a, 2b, 2c) having at least a mobile tool (2a) for working products (3) and at least a safety system (4) for operating said tool (2a) in safety conditions for a user and comprising:
- at least a piece of clothing (5) wearable by said user which comprises at least a protection glove for the hands of said user,
- at least an electromagnetic field generator (6) which is mounted on at least one between said piece of clothing (5) and said machine (2a, 2b, 2c), and
- at least an electromagnetic sensor element (8) which is suitable for cooperating with said electromagnetic field (7) to determine the position of said piece of clothing (5) with respect to said tool (2a) and which is mounted on at least one between said piece of clothing (5) and said machine (2a, 2b, 2c),
said electromagnetic field generator (6) and said electromagnetic sensor element (8) being electronically associated with a processing and control unit (9) suitable for calculating the position of said piece of clothing (5) with respect to said tool (2a) according to the signal read by said electromagnetic sensor element (8) and allowing the operation/deactivation of said tool (2a) according to such position, **characterized by** the fact that:
- said electromagnetic field generator (6) is mounted on said piece of clothing (5) and said electromagnetic sensor element (8) is mounted on said machine (2a, 2b, 2c);
- said electromagnetic field generator (6) comprises at least a first metal element (12) and a second metal element (13) between which at least an alternate-current generator (14) is placed, and
- said glove (5) comprises a multi-layer structure having:
- a first layer (26), for outer covering, in electrically insulating material;
- a second layer (27), in electrically conductive material, arranged inside said first layer (26) and suitable for defining said first metal element (12);
- a third layer (28), in electrically insulating material, arranged inside said second layer (27);
- a fourth layer (29), in electrically conductive material, arranged inside said third layer (28) and suitable for defining said second metal element (13) and for being placed directly in contact with the hand of said user.

2. Plant (1) according to the claim 1, **characterised by** the fact that said electromagnetic field (7) is an electric field of variable intensity in quasistatic condition.

3. Plant (1) according to one of the preceding claims, **characterised by** the fact that said glove (5) comprises a cuff (15), wherein is housed said alternate-current generator (14) electrically connected to said second layer (27) and to said fourth layer (29).

4. Plant (1) according to one of the preceding claims, **characterised by** the fact that said glove (5) comprises a supply battery of said alternate-current generator (14).

5. Plant (1) according to one of the preceding claims, **characterised by** the fact that said machine (2a, 2b, 2c) comprises a recharging station (16) for recharging said supply battery.

6. Plant (1) according to one of the preceding claims, **characterised by** the fact that said electromagnetic sensor element (8) comprises at least a metal body (17) which can be placed substantially in the proximity of said tool (2a).

7. Plant (1) according to one of the preceding claims, **characterised by** the fact that said machine (2a, 2b, 2c) is of the stone breaking type and has at least one base frame (2b) and at least one work and support table (2c) for stones (3) to be broken, said tool (2a) comprising a breaking blade moving along a substantially vertical direction above said work and support table (2c).

8. Plant (1) according to one of the preceding claims, **characterised by** the fact that said metal body (17) is mounted on said tool (2a) substantially around said breaking blade (2a).

9. Plant (1) according to one of the preceding claims, **characterised by** the fact that it comprises at least a detection appliance for detecting any positioning of at least one hand of said user underneath said stones (3) to be broken.

10. Plant (1) according to one of the preceding claims, **characterised by** the fact that said processing and control unit (9) is suitable for identifying a safety volume (19, 20) substantially separate from the moving area of said tool (2a), the positioning of said piece of clothing (5) in said safety volume (19, 20) being suitable for allowing the operation of said tool (2a) and the positioning of said piece of clothing (5) outside said safety volume (19, 20) being suitable for deactivating said tool (2a).

## Patentansprüche

1. Anlage zur Bearbeitung von Produkten umfassend zumindest eine Maschine (2a, 2b, 2c) mit zumindest einem beweglichen Werkzeug (2a) zur Bearbeitung von Produkten (3) sowie zumindest einem Sicherheitssystem (4) zum Bedienen des Werkzeugs (2a) durch einen Bediener unter Sicherheitsbedingungen, umfassend:
- zumindest ein von dem Bediener zu tragendes Kleidungsstück (5), das zumindest einen Schutzhandschuh für die Hände des Bedieners umfasst,
- zumindest einen Magnetfeldgenerator (6), der an dem Kleidungsstück (5) und/oder der Maschine (2a, 2b, 2c) angebracht ist, und
- zumindest ein elektromagnetisches Sensorelement (8), das dazu dient, zusammen mit dem elektrischen Magnetfeld (7) die Position des Kleidungsstücks (5) bezüglich des Werkzeugs (2a) zu bestimmen, und das an dem Kleidungsstück (5) und/oder der Maschine (2a, 2b, 2c) angebracht ist,
wobei der Magnetfeldgenerator (6) und das elektromagnetische Sensorelement (8) elektronisch mit einer Verarbeitungs- und Steuereinheit (9) in Verbindung stehen, die dazu dient, anhand des von dem elektromagnetischen Sensorelement (8) erfassten Signals die Position des Kleidungsstücks (5) bezüglich des Werkzeugs (2a) zu berechnen und anhand dieser Position die Bedienung/Deaktivierung des Werkzeugs (2a) zu ermöglichen, **dadurch gekennzeichnet, dass**:
- der Magnetfeldgenerator (6) an dem Kleidungsstück (5) angebracht ist und das elektromagnetische Sensorelement (8) an der Maschine (2a, 2b, 2c) angebracht ist;
- der Magnetfeldgenerator (6) zumindest ein erstes Metallelement (12) sowie ein zweites Metallelement (13) umfasst, zwischen denen zumindest ein Wechselstromgenerator (14) angeordnet ist, und
- der Handschuh (5) eine mehrlagige Struktur aufweist mit:
- einer ersten Schicht (26) aus einem elektrisch isolierenden Material zur äußeren Abdeckung;
- einer zweiten Schicht (27) aus einem elektrisch leitenden Material, die innerhalb der ersten Schicht (26) angeordnet ist und zur Bildung des ersten Metallelements (12) dient;
- einer dritten Schicht (28) aus einem elektrisch isolierenden Material, die innerhalb der zweiten Schicht (27) angeordnet ist;
- einer vierten Schicht (29) aus einem elektrisch leitenden Material, die innerhalb der dritten Schicht (28) angeordnet ist und zur Bildung des zweiten Metallelements (13) dient und in direkten Kontakt mit der Hand des Bedieners gebracht werden kann.

2. Anlage (1) gemäß Anspruch 1, **dadurch gekennzeichnet, dass** das elektromagnetische Feld (7) ein elektrisches Feld mit variabler Intensität in einem quasistatischen Zustand ist.

3. Anlage (1) gemäß einem der vorangehenden Ansprüche, **dadurch gekennzeichnet, dass** der Handschuh (5) einen Umschlag (15) umfasst, in dem der elektrisch mit der zweiten Schicht (27) und der vierten Schicht (29) verbundene Wechselstromgenerator (14) untergebracht ist.

4. Anlage (1) gemäß einem der vorangehenden Ansprüche, **dadurch gekennzeichnet, dass** der Handschuh (5) eine Versorgungsbatterie des Wechselstromgenerators (14) umfasst.

5. Anlage (1) gemäß einem der vorangehenden Ansprüche, **dadurch gekennzeichnet, dass** die Maschine (2a, 2b, 2c) eine Ladestation (16) zum Laden der Versorgungsbatterie umfasst.

6. Anlage (1) gemäß einem der vorangehenden Ansprüche, **dadurch gekennzeichnet, dass** das elektromagnetische Sensorelement (8) zumindest einen Metallkörper (17) umfasst, der im Wesentlichen in der Nähe des Werkzeugs (2a) angeordnet werden kann.

7. Anlage (1) gemäß einem der vorangehenden Ansprüche, **dadurch gekennzeichnet, dass** es sich bei der Maschine (2a, 2b, 2c) um einen Steinbrecher handelt, der zumindest ein Grundgestell (2b) sowie zumindest einen Arbeits- und Auflagetisch (2c) zum Zerteilen von Steinen (3) aufweist, wobei das Werkzeug (2a) eine Brechklinge umfasst, die sich entlang einer im Wesentlichen vertikalen Richtung oberhalb des Arbeits- und Auflagetisches (2c) bewegt.

8. Anlage (1) gemäß einem der vorangehenden Ansprüche, **dadurch gekennzeichnet, dass** der Metallkörper (17) im Wesentlichen um die Brechklinge (2a) herum an dem Werkzeug (2a) befestigt ist.

9. Anlage (1) gemäß einem der vorangehenden Ansprüche, **dadurch gekennzeichnet, dass** sie zumindest eine Erfassungsvorrichtung zum Erfassen einer Position zumindest einer Hand des Bedieners unterhalb der zu zerteilenden Steine (3) umfasst.

10. Anlage (1) gemäß einem der vorangehenden Ansprüche, **dadurch gekennzeichnet, dass** die Verarbeitungs- und Steuereinheit (9) zur Identifizierung einer Sicherheitszone (19, 20) dient, die im Wesentlichen von dem Bewegungsbereich des Werkzeugs (2a) getrennt ist, wobei es anhand der Positionierung des Kleidungsstücks (5) in der Sicherheitszone (19, 20) möglich ist, die Bedienung des Werkzeugs (2a) zu ermöglichen, und es anhand der Positionierung des Kleidungsstücks (5) außerhalb der Sicherheitszone (19, 20) möglich ist, das Werkzeug (2a) zu deaktivieren.

## Revendications

1. Installation (1) pour travailler des produits comprenant au moins une machine (2a, 2b, 2c) équipée d'au moins un outil mobile (2a) pour travailler des produits (3) et au moins un système de sécurité (4) pour faire fonctionner ledit outil (2a) dans des conditions de sécurité pour un utilisateur et comprenant :
- au moins un article d'habillement (5) pouvant être porté par ledit utilisateur comprenant au moins un gant de protection pour les mains dudit utilisateur,
- au moins un générateur de champ électromagnétique (6) qui est monté sur au moins un parmi ledit article d'habillement (5) et ladite machine (2a, 2b, 2c), et
- au moins un élément capteur électromagnétique (8) apte à coopérer avec ledit champ électromagnétique (7) pour déterminer la position dudit article d'habillement (5) par rapport audit outil (2a) et qui est monté sur au moins un parmi ledit article d'habillement (5) et ladite machine (2a, 2b, 2c),
ledit générateur de champ électromagnétique (6) et ledit élément capteur électromagnétique (8) étant associés électroniquement à une unité de traitement et de commande (9) appropriée pour calculer la position dudit article d'habillement (5) par rapport audit outil (2a) en fonction du signal lu par ledit élément capteur électromagnétique (8) et permettant la mise en fonctionnement/la désactivation dudit outil (2a) selon ladite position, **caractérisée en ce que** :
- ledit générateur de champ électromagnétique (6) est monté sur ledit article d'habillement (5) et ledit élément capteur électromagnétique (8) est monté sur ladite machine (2a, 2b, 2c) ;
- ledit générateur de champ électromagnétique (6) comprend au moins un premier élément métallique (12) et un second élément métallique (13) entre lesquels au moins un générateur de courant alternatif (14) est placé, et
- ledit gant (5) comprend une structure à couches multiples comprenant :
- une première couche (26), servant de revêtement externe, en matériau isolant électriquement ;
- une seconde couche (27), en matériau électriquement conducteur, agencée dans ladite première couche (26) et apte à définir ledit premier élément métallique (12) ;
- une troisième couche (28), en matériau isolant électriquement, agencée dans ladite seconde couche (27) ;
- une quatrième couche (29), en matériau électriquement conducteur, agencée dans ladite troisième couche (28) et apte à définir ledit second élément métallique (13) et à être placée directement en contact avec la main dudit utilisateur.

2. Installation (1) selon la revendication 1, **caractérisée en ce que** ledit champ électromagnétique (7) est un champ électrique d'intensité variable dans un état quasi statique.

3. Installation (1) selon l'une des revendications précédentes, **caractérisée en ce que** ledit gant (5) comprend une manchette (15), dans laquelle est logé ledit générateur de courant alternatif (14) connecté électriquement à ladite seconde couche (27) et à ladite quatrième couche (29).

4. Installation (1) selon l'une des revendications précédentes, **caractérisée en ce que** ledit gant (5) comprend une batterie d'alimentation dudit générateur de courant alternatif (14).

5. Installation (1) selon l'une des revendications précédentes, **caractérisée en ce que** ladite machine (2a, 2b, 2c) comprend une station de recharge (16) pour recharger ladite batterie d'alimentation.

6. Installation (1) selon l'une des revendications précédentes, **caractérisée en ce que** ledit élément capteur électromagnétique (8) comprend au moins un corps métallique (17) pouvant être placé sensiblement à proximité dudit outil (2a).

7. Installation (1) selon l'une des revendications précédentes, **caractérisée en ce que** ladite machine (2a, 2b, 2c) est du type à fendre la pierre et comprend au moins un châssis de base (2b) et au moins une table de travail et de support (2c) pour recevoir les pierres (3) à fendre, ledit outil (2a) comprenant une lame à fendre se déplaçant le long d'une direction sensiblement verticale au dessus de ladite table de travail et de support (2c).

8. Installation (1) selon l'une des revendications précédentes, **caractérisée en ce que** ledit corps métallique (17) est monté sur ledit outil (2a) sensiblement autour de ladite lame à fendre (2a).

9. Installation (1) selon l'une des revendications précédentes, **caractérisée en ce qu'**elle comprend au moins un dispositif de détection pour détecter tout positionnement d'au moins une main dudit utilisateur en dessous desdites pierres (3) à fendre.

10. Installation (1) selon l'une des revendications précédentes, **caractérisée en ce que** ladite unité de traitement et de commande (9) est appropriée pour identifier un volume de sécurité (19, 20) sensiblement distinct de la zone de déplacement dudit outil (2a), le positionnement dudit article d'habillement (5) dans ledit volume de sécurité (19, 20) étant approprié pour permettre le fonctionnement dudit outil (2a) et le positionnement dudit article d'habillement (5) en dehors dudit volume de sécurité (19, 20) étant approprié pour désactiver ledit outil (2a).
